# EUROPEAN PATENT SPECIFICATION

(11) **EP 3 908 754 B1**
(45) Date of publication and mention of the grant of the patent: **07.06.2023**
(21) Application number: 19836574.4
(22) Date of filing: 19.12.2019
(51) Int. Cl.: F03G 7/08, H02N 2/18

(54) **MULTIFUNCTIONAL VECTOR DEVICE FOR GENERATING AND/OR TRANSMITTING ELECTRICAL ENERGY AND/OR ELECTRICAL SIGNALS**
MULTIFUNKTIONALE VEKTORVORRICHTUNG ZUR ERZEUGUNG UND/ODER ÜBERTRAGUNG ELEKTRISCHER ENERGIE UND/ODER ELEKTRISCHER SIGNALE
DISPOSITIF VECTORIEL MULTIFONCTIONNEL POUR GÉNÉRER ET/OU TRANSMETTRE DE L'ÉNERGIE ÉLECTRIQUE ET/OU DES SIGNAUX ÉLECTRIQUES

(30) Priority: 08.01.2019 IT 201900000148
(43) Date of publication of application: 17.11.2021
(73) Proprietor: Sleng S.r.l., 42121 Reggio Emilia (IT)
(72) Inventor: CAPPELLI, Fabio Renato, 40068 San Lazzaro di Savena, Province of Bologna (IT); SACCARDI, Pierluigi, 42030 Vezzano sul Crostolo, Province of Reggio Emilia (IT)
(74) Representative: Mola, Edoardo
(86) International application number: PCT/IB2019/061107
(87) International publication number: WO 2020/144519

(56) References cited:
- WO-A1-2011/141812

## Description

The present invention concerns a multifunctional vector device adapted to move and operate inside an insulating fluid with binding properties, in particular a suspension mass, and a system and a method for the generation and/or transmission of electric energy and/or of electrical signals using for this purpose one or more multifunctional vector devices according to the invention.

The field of application of the invention is the generic field of the generation and/or transmission of electric energy and/or of electrical signals in a wide range of environments and in a wide variety of applications, wherever important changes in temperature occur or pulsating forces of an intensity and duration that can be foreseen and are not destructive develop, such as on roads along which established vehicle traffic travels or structures stressed by winds of variable intensities and directions.

The applicant has no knowledge of any multifunctional vector device of the type indicated above and described in detail in the description below, nor of any system and method comparable to those described hereinafter in this document.

The prior art discloses systems for the generation and transmission of electric energy based on the preparation of packets of piezoelectric devices capable of generating pulsed currents appropriately provided with rectifier elements adapted to generate a desired electrical current, systems typically positioned under the road surface to generate energy with the periodic passage of vehicles. An example is provided by the Chinese patent document CN105099267.

These prior art systems are extremely rigid and consequently fragile and continuously subject to partial or total breakages, with poor malleability and hence substantially incapable of adapting to changed and changeable conditions of the environment in which they are installed, for example the road surface.

A further prior art document WO 2011/141812 A1 discloses a device according to the preamble of claim 1. This device comprises piezo-electric and electromagnetic means for harvesting kinetic energy of a moving vehicle.

The present invention aims to solve the drawbacks of the prior art mentioned above and to indicate a multifunctional vector device adapted to move and operate inside an insulating fluid with binding properties, a system and a method for the generation and/or transmission of electric energy and/or of electrical signals capable of fluidly and efficiently adapting to a wide variety of environmental conditions and changeability of these conditions.

An object of the invention is that of being capable both of generating electric energy, and of transmitting electrical signals and hence information in a wide variety of environments and conditions to which the system is able to adapt.

An object is that of guaranteeing the maximum adaptability and efficiency of the system in environments in which insulating fluids with binding properties are naturally present, for example inside bitumen present in the road surface, when paved.

To achieve these objects, the subject matter of the present invention is a multifunctional vector device adapted to move and operate inside an insulating fluid with binding properties, a system and a method for the generation and/or transmission of electric energy and/or of electrical signals according to the specifications of the appended claims.

Advantageously, the multifunctional vector devices according to the invention are able to move, adapt to allocated shapes and hence adopt precise and established configurations inside an insulating fluid with binding properties according to the system and the method illustrated, in particular orientated and directed by the magnetic field generator means, so that they are as adaptable as possible to environments in which these fluids are naturally present. Inside these they are able to operate both in the generation and in the transmission of electric energy and/or electrical signals in a reliable manner and are subject to very few breakages as fluidly integrated in the same environments.

The multifunctional vector devices also consist of a simple, efficient, reliable substantially elastic structure subject to very few breakages, especially as operating inside insulating fluids with binding properties.

Advantageously, the multifunction vector devices inside the system can adopt a wide variety of electrical configurations once the method has been implemented, such as being connected in series, in parallel or a combination of these two solutions; moreover, they can form very complex groups, long sequences when associated in long strings, as well as adapt to even very complex and structured paths.

The system is simple and reliable in formation, as well as easily and simply reversible in its capacity to generate electric energy and/or convey electrical signals along an established direction inside said fluids, at the same time being able both to generate electric energy and convey electrical signals.

In the system according to the invention, the presence of a laser device with said properties advantageously allows the system to change configuration and mode of electrical functions simply, once the multifunctional vector devices have been installed, simply through a sequential command for activation of a dual laser beam along pairs of multifunctional vector devices present along a path or area where the passage of electrical signals and/or the generation of electric energy is required to be activated or deactivated. In this way the laser device operates simply as a sequential mode switch with respect to the fact of producing a short circuit in each single vector device through which one or more electrical signals are required to pass, or vice versa of removing a short circuit if the generation of only electric current is required.

When the system is in configuration so as to allow the transfer of electrical signals along a spatial path through a sequence of vector devices in short circuit, due to its electrical composition it is advantageously possible to convey electrical signals both of a direct and alternating nature, with a substantially null transport resistance value.

The method is of simple implementation in various environments and for a wide variety of types of applications in the generic electronic field for the transport of electrical signals in highly insulating environments, such as in the orthopaedics field for the manufacture of various sensors for prosthetic applications.

Further objects, features and advantages of the present invention will be apparent from the detailed description below of a preferred application of the invention and related variant, provided purely by way of non-limited example with the aid of the accompanying figures, wherein:

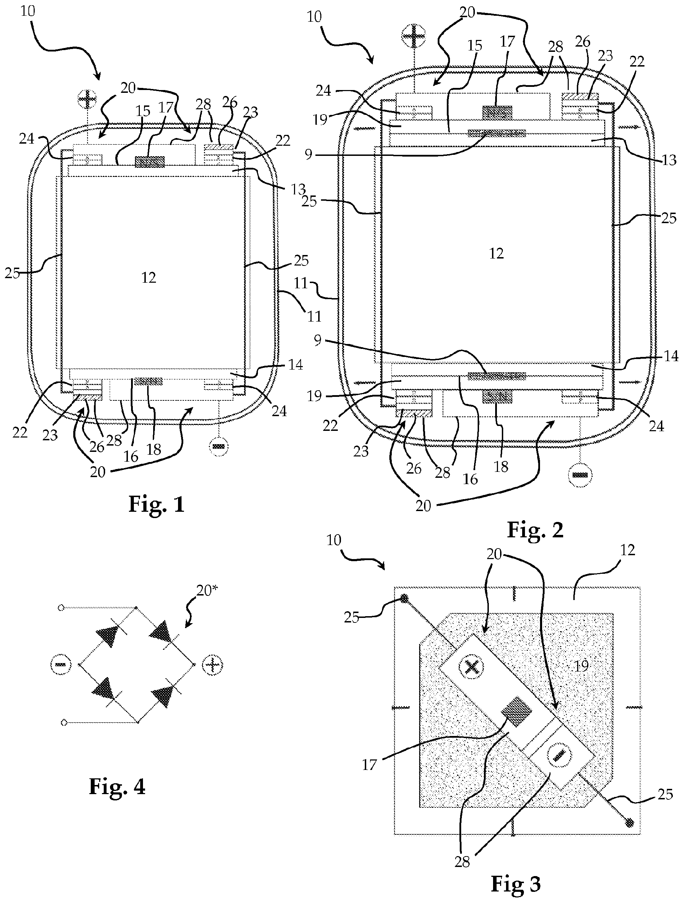

- Fig. 1 represents a cross-sectional elevation view of a multifunctional vector device according to the invention;
- Figs. 2 and 3 respectively represent a cross-sectional elevation view and a top schematic view with some details omitted of a variant to the multifunctional vector device of Fig. 1.
- Fig. 4 illustrates an electrical diagram of reference relating to the devices of Figs. 1-3;

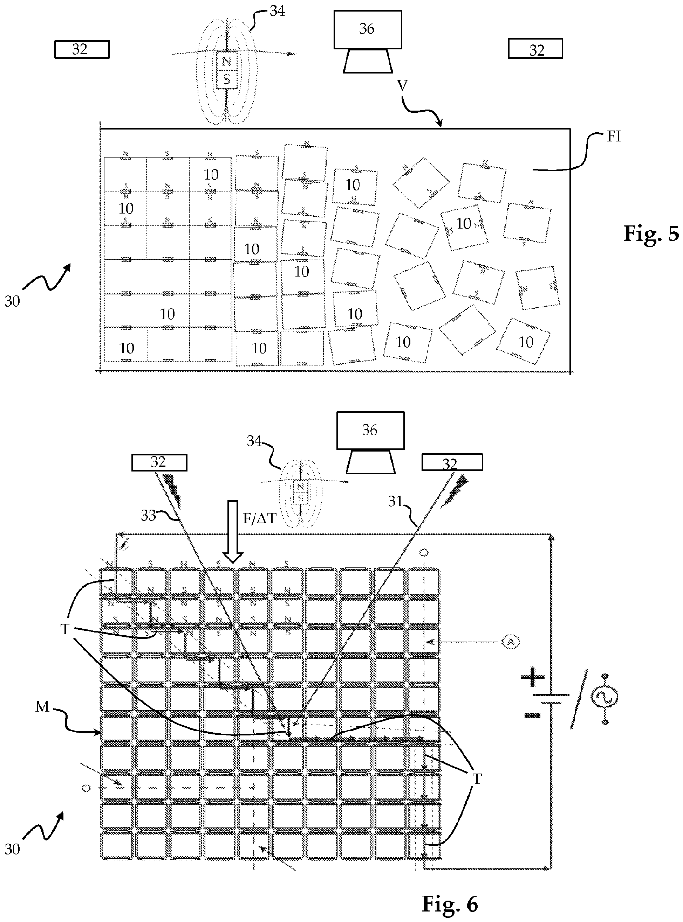

- Fig. 5 illustrates a schematic elevational view of a system for the generation and/or transmission of electric energy and/or of signals in a step of a method for the generation and/or transmission of electric energy and/or of signals according to the invention, in particular in the step of orientation of the multifunctional vector devices present in an insulating fluid inside a working volume;
- Fig. 6 illustrates a schematic elevational view of the system of Fig. 5 in a different step of the method for the generation and/or transmission of electric energy and/or of signals according to the invention, in particular in the step of activation of the transmission of electrical signals along a specific sequence of multifunctional vector devices;

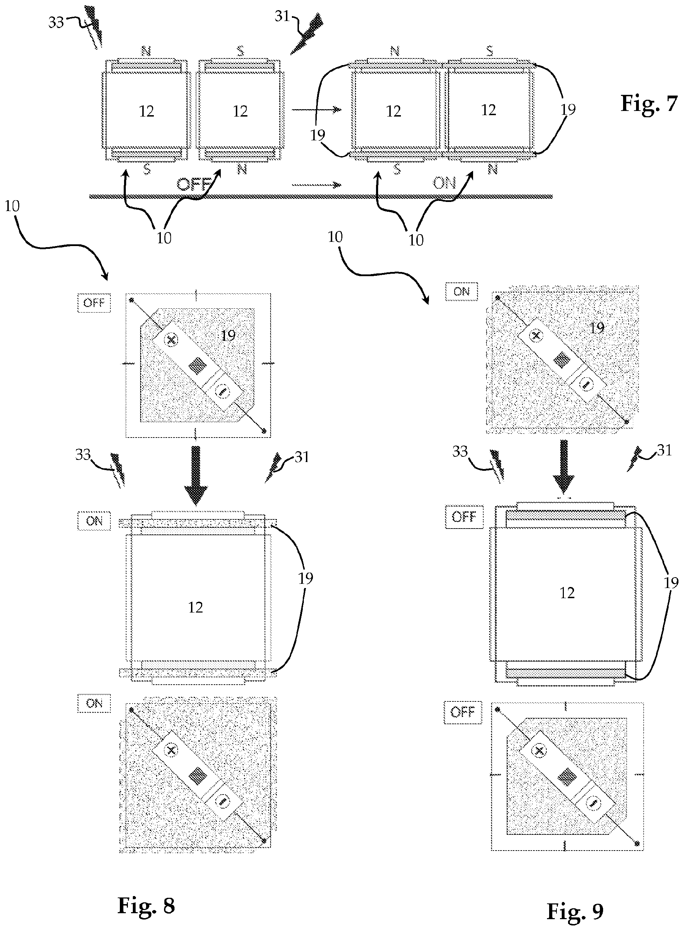

- Fig. 7 represents an elevational view regarding a transverse coupling with electrical continuity of a pair of vector devices of Fig. 2 respectively when not in short circuit (OFF position) on the left, or when in short circuit (ON position) through the intervention of a laser device, on the right;
- Figs. 8 and 9 represent a sequence of three top and elevational schematic views of the device of Fig. 2 in the step of the method to which Fig. 6 refers, in particular during activation by means of laser device of the vector device respectively when it is in operating conditions generating electric current, hence not in short circuit (OFF position) unable to transfer electrical signals, or in short circuit (ON position) where it is able to transfer electrical signals.

With reference to Figs. 1-9, a multifunctional vector device is indicated as a whole with 10 adapted to move and operate inside an insulating fluid with binding properties, in the detail of Fig. 5 a suspension mass FI present in a working volume V inside which electric energy and/or electrical signals are required to be generated and/or transmitted. For example, this suspension mass FI could consist of cellulose, silicones, or bitumen adapted to be laid on the ground to then form the asphalt of a road.

The multifunctional vector device 10 as detailed and illustrated in particular in Fig. 1 and in a variant thereof of Fig. 2, is composed of:
- a central core 12 consisting of piezoelectric or piezo thermal material or material with triboelectric properties, prepared so as to generate pulsating electric currents once subjected to a physical stress suitable for the purpose, i.e., stressed by pulsating forces or variable thermal gradients, for example piezoelectric devices PZT or piezo thermal devices known in the art, where a pair of electrodes 13,14 with opposite polarity, for example consisting of a Ag based hydrogel paste, are present at two ends thereof;
- electric current rectifier means, indicated as a whole with 20, which in the preferred example of embodiment illustrated are prepared in a substantially Graetz bridge 20* arrangement according to the electric diagram of Fig. 4, which are associated with the pair of electrodes 13,14 of the central core 12 so as to define, on a pair of outer faces 15,16, a pair of polarities +,- at output from the same rectifier means 20 and where the central core 12, when subjected to a physical stress adapted for the purpose, generates a pulsed electric current that is made direct, at output on said pair of polarities +,-, from the rectifier means 20;
- ferromagnetic means 17,18 associated with each of the outer faces 15,16 adapted as a whole to generate a specific, polarised and directed magnetic field, for example consisting of a same ferromagnetic or premagnetised material having different thicknesses and volumes on the two electrodes 13, 14;
- insulating type protective means 11 associated with the central core 12 and with the rectifier means 20 to cover and insulate the assembly of said central core 12 and rectifier means 20, for example composed of a thin sheath of organic insulating substances of a type consisting of parylene and/or cellulose, i.e. the protective means 11 are of a type simply perforable by a laser beam even when inserted in a suspension mass FI.

More in detail, the rectifier means 20 in a Graetz bridge 20* arrangement are composed of:
- above each of said pair of outer faces 15, 16 and in electrical contact therewith, a pair of diode means 22, 24 spaced from each other, in particular with interposition at a respective distance of at least part of said ferromagnetic means 17,18, the diode means 22, 24 being for example composed of deposits of semiconductor materials to form polarised junctions of p-n, n-p type for example consisting of suitably doped Si, or junctions of CuO, ZnO type deposited with the ink-jet technique;
- a pair of conductor means 25, for example consisting of a PEDOT type conducting polymer or Ag hydrogel paste, which each connect one of the diode means 22, 24 of the respective pair of diode means 24, 22 present on the respective outer face 15, 16;
- insulating means 26 applied to an outer surface 23 of a pair of diode means 22 each positioned on a different outer face 15, 16, which form a regular surface, in particular substantially flat 28, with respective contact surfaces associated externally with the remaining pair of diode means 24 present on each outer face 15,16 and which form said polarities +,- at output from the rectifier means 20.

With specific reference to Figs. 2-3 and also to the subsequent Figs. 7-9, the multifunctional vector device 10 can advantageously be provided with NiTiNol type means 19 associated permanently and with electrical continuity with each pair of outer faces 15, 16 of the central core 12, in particular below the diode means 22,24 and directly on the same outer faces 15,16 with interposition of electrically conductive adhesive means 9 placed centrally, for example consisting of a PEDOT-PSS type polymer having adhesive properties. These NiTiNol type means are in particular substantially in the shape of plate 19 and operative to increase their transverse volume when stressed by a heat source of sufficient power until intercepting the pair of conductor means 25 thus short circuiting the vector device 10, ON position, or subsequently substantially returning to the original position if further stressed by a heat source of sufficient power, thus re-establishing the original Graetz bridge configuration 20*, OFF position.

It is evident that, if in short circuit in ON position, the vector device 10 performs the function of conductor both in the direction between anode and cathode 13, 14, and in the transverse direction as, when close to another contiguous vector device 10 also in ON position, the respective NiTiNol plates 19 come into mutual contact, as illustrated on the right-hand side of Fig. 7. The vector device 10 is thus advantageously capable of transferring electrical signals also of alternating nature, with practically zero electrical resistance.

With reference to Figs. 5-6, a system for the generation and/or transmission of electric energy and/or of electrical signals according to the invention is indicated as a whole with 30. It is composed of:
- at least one multifunctional vector device 10, in particular a plurality of these adapted to move and operate inside a suspension mass FI which fills a working volume V inside which electric energy and/or electrical signals are required to be generated and/or transmitted;
- a laser device 32 of a type with dual output beam 31, 33 suitable to melt and/or perforate said insulating means 11 of the vector device 10 and if necessary activate the NiTiNol type means 19 present in the same device 10 when the vector devices 10 are present inside an insulating fluid FI, in particular a suspension mass inside a working volume V;
- magnetic field generator means 34 of a type suitable to direct the multifunctional vector devices 10 inside the insulating fluid FI according to given and desired spatial paths T, for example the means consisting of generators with natural magnetic properties rather than those composed of electrical coils through which direct current flows.

The laser device, for example a dual beam galvanic laser, is adjusted so as to emit two levels of output power: a first output power adapted to melt and/or perforate the insulating means 11, a second output power, stronger than the first, suitable to activate the NiTiNol type means 19 when the vector devices 10 are present inside the insulating fluid FI, allowing its respective expansion or reduction, as will be more apparent in the description below.

Optionally, the system comprises, as ancillary device, drying means of the insulating fluid FI, for example an air blower 36 of a type with air heatable on demand. In this way it is advantageously possible to establish and calculate any drying times of the insulating fluid FI and make implementation of the system 30 more effective.

For correct operation of the system 30 in the case in which a plurality di vector devices 10 are used, it is fundamental, after having established the configuration in which always the same polarity +,- at output from the rectifier means 20 is fixed above and below the core 12, for these to consist:
- substantially of 50% of vector devices 10 having a first ferromagnetic polarity, for example N, present above the core 12 and with polarised value substantially prevalent with respect to a second polarity, for example S, present below the core;
- the remaining part of vector devices 10 having the second ferromagnetic polarity, for example S, present above the core 12 and the first polarity, for example N, present below the core.

In this way, it is advantageously possible for the same vector devices 10 to be arranged according to a plurality of close and contiguous rows, in particular in vertical direction as in Figs. 5-6, when ordered according to desired spatial paths T by the magnetic field generator means 34, maintaining unchanged the capacity to generate electric current according to what will be better specified below in steps a)-g) of the method according to the present invention.

Moreover, the higher the ferromagnetic imbalance between the two poles N, S of the core 12 is, the greater the capacity of the vector devices 10 to be quickly orientated and compacted inside the working volume V to form a working mass M will be.

Operation of the aforesaid system 30 in accordance with the method for the generation and/or transmission of electric energy and/or of electrical signals according to the invention will now be described in detail. This method comprises the steps of:
a) defining a working volume V inside which electric energy and/or electrical signals are required to be generated and/or transmitted;
b) filling the working volume V with an insulating fluid with binding properties, in particular a suspension mass FI;
c) dispersing at least one multifunctional vector device 10 inside the insulating fluid FI, the multifunctional vector devices 10 consisting substantially of 50% of vectors polarised by said ferromagnetic means 17, 18 with a specific magnetic polarity N, S present at an electrical polarity +,- at output from the rectifier means 20 and the remaining part polarised with the other magnetic polarity S, N present at the same electrical polarity +,- of the rectifier means 20;
d) directing said vector devices 10 inside the insulating fluid F according to a predetermined spatial arrangement through the application of a magnetic field generated by the magnetic field generator means 34;
e) waiting for the insulating fluid F to dry, optionally activating drying means of the insulating fluid 36 so as to form the working mass M substantially constituted by the assembly of vector devices 10 present in the working volume V after having been suitably orientated according to specific geometries by the magnetic field generator means 34, amalgamated and compacted inside the insulating fluid Fl;
f) operating the laser device 32 directing a pair of laser beams 31, 33 so that they affect, at all times, a single multifunctional vector device 10 at a first level of output power capable of melting and/or perforating the relative insulating type protective means 11, activating it electrically;
g) the pair of laser beams 31,33 is then directed following a spatial path T along which electric energy is required to be generated and transmitted through the multifunctional vector devices 10 present along said spatial direction T.

For the method described above the necessary steps are a)-d) and f)-g), as the drying step e) is substantially ancillary, as the physical and electrical conditions to move on to the subsequent steps and nonetheless only achieve generation and transmission of electric energy through the multifunctional vector devices 10 can take place. In fact, once the vector devices 10 have been activated at step f), when the cores 12 are stressed by pulsating forces rather than by variable temperature gradients depending on whether they consist of piezoelectric or piezo thermal material or material with triboelectric properties, they are capable of generating electric current and transmitting it to other vector devices 10 only when stacked in the direction in which they were orientated by the magnetic field generator means 34, i.e., vertically as shown on the left-hand side of the volume V in Fig. 5 and in Fig. 6, as the opposite polarities +,- of the respective outputs of the rectifier means 20 are in contact. In this configuration it is thus possible to collect electric energy only at the ends of these stacks of vector devices 10, when the system is provided with a pair of conductor plates, omitted for simplicity, for example consisting of Ag based Hydrogel paste, each connecting a same polarity +,- of a plurality of said stacks of vector devices 10.

In order for a transverse transmission between vector devices 10 of only electrical signals, and no longer of electric currents generated in the cores 12, to take place, it is necessary advantageously to move onto the following step of the method according to the invention:
h) operating the laser device 32 until a pair of laser beams 31,33 hits the vector devices 10 present along a spatial path T required for the transmission of electrical signals, with a second output power capable of activating the NiTiNol type means 19 present in the respective vector devices 10, which pass from the OFF position to the ON position as illustrated in Figs. 7 and 8, so as to produce a short circuit of said electric current rectifier means 20 with the respective opposite polarities +,- and only allow the passage of electrical signals between adjacent vector devices 10, as already described previously with reference to the same figures.

This step advantageously allows an electric signal to pass along a spatial path T composed of vertical passages and transverse passages between respective and contiguous vector devices 10 present along the same spatial path T. A simultaneous passage of electric current according to paths and methods already described is possible only in the case in which, along the string of aligned vector devices 10, none of these has been further activated as at the previous step h).

The system and the method according to the invention allow great possibilities and variabilities of the paths and of the conditions of transmission of electrical signals and/or electric currents through the whole working mass M. This is possible through the following step i) of the method and the repetition of this step i) each time a different generation and/or transmission of electric current and/or of electrical signals along predetermined spatial direction T is required:
i) operating the laser device 32 directing a pair of laser beams 31, 33 with said second output power capable of activating the NiTiNol type means 19 according to a spatial path T along which the passage of electrical signals and/or electric currents through the respective previously activated vector devices (10) is to be interrupted, which pass from an ON position to an OFF position as shown in Fig. 9, so that the respective plates 19 of the NiTiNol type means relative to the adjacent vector devices 10 previously activated are withdrawn, in this way reactivating the rectifier means 20 of the respective vector devices 10; moreover, other vector devices 10 present in a different spatial path T along which the passage of electrical signals and/or electric currents as in the previous step h) is required to take place can be activated, it being possible to repeat the following step each time the conditions of generating and/or transmitting electric currents and/or electrical signals according to a desired and different spatial direction T require to be changed.

Owing to the above, it is possible to point a pair of convergent laser beams 31, 33 on each adjacent pair of vector devices 10 with an output power capable of activating the NiTiNol type means 19 when wishing to activate the transverse passage of electrical signals present along a specific and given spatial path T, rather than interrupt this passage with the same methods and reactivate the generation of electric current. Therefore, the laser device 32 advantageously operates as a switch suitable to activate or deactivate the passage of currents and/or electrical signals along a generic path T identifiable inside the working mass M.

It is clear that those skilled in the art can make further and numerous variants to the multifunctional vector device adapted to move and operate inside an insulating fluid with binding properties, to the system and to the method for the generation and/or transmission of electric energy and/or of electrical signals according to the invention; it is also clear that in the practical embodiment thereof the forms of the details illustrated can vary and can be replaced with technically equivalent elements.

For example, the system could consist of a single multifunction vector device, or of a few units with dimensions comparable to those related to the suspension mass and to the working volume inside which they are to operate.

## Claims

1. A multifunctional vector device adapted to move and operate inside an insulating fluid with binding properties, in particular a suspension mass (FI), for the generation and/or transmission of electric energy and/or of electrical signals, comprising
- a central core (12) consisting of piezoelectric or piezo thermal material or material with triboelectric properties, prepared so as to generate pulsating electric currents once subjected to a physical stress adapted for the purpose, being provided at two ends thereof with a pair of electrodes (13,14) with opposite polarity;
- electric current rectifier means (20), in particular prepared in an substantially Graetz bridge (20*) arrangement, associated with said pair of electrodes (13,14) of the central core (12) so as to define, on a pair of outer faces (15,16), a pair of polarities (+,-) at output from the same rectifier means (20) and where said central core (12), when subjected to a physical stress adapted for the purpose, generates a pulsating electric current that is made direct, at output on said pair of polarities (+,-) from the rectifier means (20);
**characterized in that** it further comprises:
- ferromagnetic means (17,18) associated with each of said outer faces (15,16) adapted as a whole to generate a specific, polarised and directed magnetic field;
- insulating type protective means (11) associated with the central core (12) and with said rectifier means (20) to cover and insulate the assembly of said central core (12) and rectifier means (20).

2. The multifunctional vector device, according to the preceding claim, **characterised in that** the rectifier means (20) comprise:
- above each of said pair of outer faces (15,16) and in electrical contact therewith, a pair of diode means (22,24) spaced from each other, in particular with interposition at a respective distance of at least part of said ferromagnetic means (17,18);
- a pair of conductor means (25), each connecting one of the diode means (22,24) of the respective pair of diode means (24,22) present on the respective outer face (15,16);
- insulating means (26) applied to an outer surface (23) of a pair of diode means (22) each positioned on a different outer face (15,16);
the insulating means (26) forming a regular surface, in particular substantially flat (28), with respective contact surfaces associated externally with the remaining pair of diode means (24) present on each outer face (15,16).

3. The multifunctional vector device, according to one of the preceding claims, **characterised by** comprising NiTiNol type means (19) associated permanently and with electrical continuity with each pair of outer faces (15,16) of the central core (12), in particular directly on the same outer faces (15,16) with interposition of electrically conductive adhesive means (9) and below diode means (22,24), said NiTiNol type means (19) being operative to increase their volume when stressed by a heat source of sufficient power until short circuiting the vector device (10) (ON position, Figs. 7-9), rather than subsequently returning substantially to the original position if further stressed by the same heat source at the same power (OFF position, Figs. 7-9).

4. The multifunctional vector device according to claims 3 and 4, **characterised in that** said NiTiNol type means are substantially in the shape of a plate (19) and operative to increase their transverse volume when stressed by a heat source of sufficient power until intercepting the pair of conductor means (25) thus short circuiting the vector device (10), (ON position, Figs. 7-9) rather than subsequently returning substantially to the original position if stressed by the same heat source at the same power (OFF position, Figs. 7-9).

5. A system for the generation and/or transmission of electric energy and/or of electrical signals **characterised by** comprising:
- at least one multifunctional vector device (10) according to one of the preceding claims;
- a laser device (32) of a type with dual output beam (31,33) adapted to melt and/or perforate said insulating means (11) of the vector device (10) and activate NiTiNol type means (19) optionally present in the same device (10) when said at least one vector device (10) is present inside an insulating fluid, in particular a suspension mass (FI) inside a working volume (V);
- magnetic field generator means (34) of a type adapted to direct the multifunctional vector devices (10) inside the insulating fluid (FI) according to given and desired spatial paths (T).

6. The system, according to the preceding claim, **characterised in that** the plurality of vector devices (10), after having established the configuration in which always the same polarity +,- at output from the rectifier means (20) is fixed above and below the core (12), comprises:
- substantially 50% of vector devices (10) having a first ferromagnetic polarity (N, S) present above the core (12) and with a polarised value substantially prevalent with respect to a second polarity (S, N) present below the same core;
- the remaining part of vector devices (10) having the second ferromagnetic polarity (S, N) present above the core (12) and the first polarity (N, S) present below the same core.

7. A method for the generation and/or transmission of electric energy and/or of electrical signals, **characterised by** comprising the steps of:
- defining a working volume (V) inside which electric energy and/or electrical signals are required to be generated and/or transmitted;
- filling the working volume (V) with an insulating fluid with binding properties, in particular a suspension mass (FI);
- dispersing at least one multifunctional vector device (10) of a type according to one of the preceding claims 1-4 inside the insulating fluid (FI), the multifunctional vector devices (10) consisting substantially of 50% of vector devices (10) polarised by said ferromagnetic means (17,18) with a specific magnetic polarity (N,S) present at an electrical polarity (+,-) at output from the rectifier means (20) and the remaining part polarised with the other magnetic polarity (S, N) present at the same electrical polarity (+,-) of the rectifier means (20);
- directing said vector devices (10) inside the insulating fluid (FI) according to a predetermined spatial arrangement (T) through a magnetic field generated by magnetic field generator means (34) of a type according to one of the preceding claims 5 and 6;
- operating a laser device (32) of a type according to one of the preceding claims 5 and 6 directing a pair of laser beams (31,33) so that they affect, at all times, a single multifunctional vector device (10) at a first level of output power capable of melting and/or perforating the relative insulating type protective means (11), activating it electrically, the pair of laser beams (31,33) then following a spatial path (T) along which electric energy to be generated and transmitted through the multifunctional vector devices (10) present along said spatial path (T) is required.

8. The method according to the preceding claim, **characterised by** comprising, before operating the laser device (32), the step of waiting for the insulating fluid (FI) to dry, optionally activating drying means (36) of the insulating fluid (FI) so as to form a working mass (M) substantially constituted by the assembly of vector devices (10) present in the working volume (V) after having been suitably orientated according to specific geometries by the magnetic field generator means (34), amalgamated and compacted inside the insulating fluid (FI).

9. The method according to the preceding claims 3, 7 and 8, **characterised by** comprising the step of operating the laser device (32) hitting the vector devices (10) present along a desired spatial path (T) for the transmission of electrical signals with a pair of laser beams (31,33) at a second output power capable of operating the NiTiNol type means (19) present in the respective vector devices (10).

10. The method according to the preceding claim, **characterised by** comprising, at the end of the preceding step, the step of operating said laser device (32) directing a pair of laser beams (31,33) with said second output power according to a spatial path (T) along which the transmission of electrical signals through previously activated vector devices (10) is to be interrupted, and activating other vector devices (10) according to a spatial path (T) along which said transmission equivalent to the preceding step is required to take place; this step being repeated each time the conditions of generation and/or transmission of electric currents and/or of electrical signals are to be changed according to a desired and different spatial path (T).

## Patentansprüche

1. Eine multifunktionale Vektorvorrichtung, welche geeignet ist, sich innerhalb einer Isolierflüssigkeit mit Bindungseigenschaften zu bewegen und zu funktionieren, insbesondere einer Suspensionsmasse (FI), zur Erzeugung und/oder Übertragung elektrischer Energie und/oder elektrischer Signale, die Folgendes umfasst:
- einen zentralen Kern (12), der aus piezoelektrischem oder piezothermischem Material oder Material mit triboelektrischen Eigenschaften besteht, welcher so beschaffen ist, dass er pulsierende elektrische Ströme erzeugt, sobald er einer zweckentsprechenden physischen Belastung ausgesetzt wird, wobei er an seinen beiden Enden jeweils mit einem Paar Elektroden (13, 14) mit entgegengesetzter Polarität ausgerüstet ist;
- Stromgleichrichterelemente (20), welche insbesondere in einer im wesentlichen wie eine Graetz-Brücke funktionierenden Anordnung ausgearbeitet und mit dem genannten Paar Elektroden (13, 14) des zentralen Kerns (12) verbunden sind, um auf einem Paar Außenflächen (15, 16) ein Paar Polaritäten (+,-) am Ausgang der Gleichrichterelemente (20) selbst zu bilden, und wobei der genannte zentrale Kern (12), wenn er einer zweckentsprechenden physischen Belastung ausgesetzt wird, einen pulsierenden elektrischen Strom erzeugt, der am Ausgang des genannten Polaritätenpaars (+,-) durch die Gleichrichterelemente (20) in Gleichstrom verwandelt wird; **dadurch gekennzeichnet, dass** sie desweiteren Folgendes umfasst:
- ferromagnetische Elemente (17, 18), welche jeweils mit jeder der genannten Außenflächen (15, 16) verbunden sind, die in ihrer Gesamtheit geeignet sind, ein spezifisches, polarisiertes und entsprechend ausgerichtetes Magnetfeld zu erzeugen;
- Isolier-Schutzelemente (11), welche jeweils mit dem zentralen Kern (12) sowie mit den genannten Gleichrichterelementen (20) verbunden sind, um die Baugruppe des genannten zentralen Kerns (12) sowie die Gleichrichterelemente (20) abzudecken und zu isolieren.

2. Die multifunktionale Vektorvorrichtung gemäß dem vorausgegangenen Anspruch, **dadurch gekennzeichnet, dass** die Gleichrichterelemente (20) jeweils Folgendes umfassen:
- oberhalb jedes der genannten Paar Außenflächen (15, 16) und jeweils in elektrischem Kontakt damit, ein Paar voneinander beabstandete Diodenelemente (22, 24), und zwar insbesondere mittels Einfügung von mindestens einem Teil der genannten ferromagnetischen Elemente (17, 18) in einem entsprechenden Abstand,
- ein Paar Leiterelemente (25), welche jeweils eines der Diodenelemente (22, 24) des entsprechenden Paars Diodenelemente (24, 22), die auf der jeweiligen Außenfläche (15, 16) angeordnet sind, verbinden;
- Isolierelemente (26), die an einer Außenfläche (23) eines Paars Diodenelemente (22) angebracht und jeweils auf einer anderen Außenfläche (15, 16) angeordnet sind;
wobei die Isolierelemente (26) eine regelmäßige und im wesentlichen flache Oberfläche (28) mit entsprechenden Kontaktflächen bilden, die außen jeweils mit dem übrigen Paar Diodenelemente (24) verbunden sind, welche sich auf jeder Außenfläche (15, 16) befinden.

3. Die multifunktionale Vektorvorrichtung gemäß einem der vorausgegangenen Ansprüche, **dadurch gekennzeichnet, dass** sie Elemente von Typ NiTiNol (19) umfasst, welche jeweils permanent und mit Stromdurchgang mit jedem Außenflächenpaar (15, 16) des zentralen Kerns (12) verbunden sind, und zwar insbesondere direkt auf den selben Außenflächen (15, 16) bei Einfügung elektrisch leitender Haftmittel (9) und unterhalb von Diodenelementen (22, 24) , wobei die genannten Elemente von Typ NiTiNol (19) so funktieren, dass ihr Volumen bei Belastung durch eine ausreichend starke Wärmequelle bis zum Kurzschließen der Vektorvorrichtung (10) (EIN-Stellung, Abb. 7 - 9) entsprechend vergrößer wird, anstatt anschließend bei weiterer Belastung durch die gleiche Wärmequelle in der gleichen Stärke (AUS-Stellung, Abb. 7-9) im Wesentlichen zur ursprünglichen Stellung zurückzukehren.

4. Die multifunktionale Vektorvorrichtung gemäß den Ansprüchen 3 und 4, **dadurch gekennzeichnet, dass** die genannten Elemente von Typ NiTiNol im Wesentlichen die Form einer Platte (19) aufweisen und so funktionieren, dass ihr Quervolumen bei Belastung durch eine ausreichend starke Wärmequelle entsprechend vergrößert wird, bis sie das Paar Leiterelemente (25) abfangen, wodurch die Vektorvorrichtung (10) kurzgeschlossen wird (EIN-Stellung, Abb. 7 - 9), anstatt anschließend bei Belastung durch die gleiche Wärmequelle mit der gleichen Stärke im wesentlichen zur ursprünglichen Stellung zurückzukehren (AUS-Stellung, Abb. 7 - 9).

5. Ein System für die Erzeugung und/oder Übertragung elektrischer Energie und/oder elektrischer Signale, **dadurch gekennzeichnet, dass** es Folgendes umfasst:
- mindestens eine multifunktionale Vektorvorrichtung (10) gemäß einem der vorausgegangenen Ansprüche;
- eine Laservorrichtung (32) des Typs mit Zweistrahl-Technologie (31, 33), welche geeignet ist, die genannten Isolierelemente (11) der Vektorvorrichtung (10) zu schmelzen und/oder zu perforieren und die Elemente von Typ NiTiNol (19) zu aktivieren, die wahlweise in der selben Vorrichtung (10) vorhanden sind, wenn die genannte mindestens eine Vektorvorrichtung (10) sich in einer Isolierflüssigkeit befindet, insbesondere in einer Suspensionsmasse (FI) in einem Betriebsvolumen (V).
- Magnetfelderzeugerelemente (34) eines Typs, welcher geeignet ist, die multifunktionalen Vektorelemente (10) in der Isolierflüssigkeit (FI) jeweils gemäß vorgegebener und erwünschter räumlicher Bahnen (T) zu steuern.

6. Das System gemäß dem vorausgegangenen Anspruch, **dadurch gekennzeichnet, dass** die Vielzahl an Vektorvorrichtungen (10) nach entsprechender Bestimmung der Konfiguration, mit der die immer gleiche Polarität +,- bei Ausgang aus den Gleichrichterelementen (20) jeweils ober- und unterhalb des Kerns (12) festgesetzt wird, Folgendes umfasst:
- Im Wesentlichen 50% der Vektorvorrichtungen (10) mit einer ersten ferromagnetischen Polarität (N, S) oberhalb des Kerns (12) und mit einem polarisierten Wert, welcher im Wesentlichen im Vergleich zu einer zweiten Polarität (S, N) vorherrschend ist, die unterhalb des Kerns selbst vorhanden ist;
- den restlichen Teil der Vektorvorrichtungen (10) mit der zweiten ferromagnetischen Polarität (S, N), die oberhalb des Kerns (12) vorhanden ist, und der ersten Polarität (N, S) , die unterhalb des Kerns selbst vorhanden ist.

7. Ein Verfahren zur Erzeugung und/oder Übertragung elektrischer Energie und/oder elektrischer Signale, **dadurch gekennzeichnet, dass** es folgende Schritte umfasst:
- die Bestimmung eines Betriebsvolumens (V), innerhalb dessen elektrische Energie und/oder elektrische Signale erzeugt und/oder übertragen werden müssen;
- das Füllen des Betriebsvolumens (V) mit einer Isolierflüssigkeit mit Bindungseigenschaften, insbesondere einer Suspensionsmasse (FI);
- die Dispersion von mindestens einer multifunktionale Vektorvorrichtung (10) des Typs gemäß einem der vorausgegangenen Ansprüche von 1 - 4 in der Isolierflüssigkeit(FI), wobei die multifunktionalen Vektorvorrichtungen (10) im Wesentlichen aus 50% Vektorvorrichtungen (10) bestehen, welche durch die genannten ferromagnetischen Elemente (17, 18) mit einer spezifischen magnetischen Polarität (N, S) polarisiert werden, welche an einer elektrischen Polarität (+,-) am Ausgang der Gleichrichterelemente (20) vorhanden sind, und der restliche Teil mit der anderen magnetischen Polarität (S, N) polarisiert wird, die an derselben elektrischen Polarität (+,-) der Gleichrichterelemente (20) vorhanden ist;
- die Steuerung der genannten Vektorvorrichtungen (10) in der Isolierflüssigkeit (FI) gemäß einer vorbestimmten räumlichen Anordnung (T) durch ein Magnetfeld, welches durch Magnetfelderzeugerelemente (34) eines Typs gemäß einem der vorausgegangenen Ansprüche 5 und 6 erzeugt wird;
- die Betätigung einer Laservorrichtung (32) eines Typs gemäß einem der vorausgegangenen Ansprüche 5 und 6 durch Steuerung eines Paars Laserstrahlen (31, 33), und zwar so, dass sie jederzeit auf eine einzelne multifunktionale Vektorvorrichtung (10) mit einem ersten Ausgangsleistungs-Level einwirken, welches in der Lage ist, das entsprechende Isolierschutzelement (11) zu schmelzen und/oder zu perforieren, indem es elektrisch aktiviert wird, wobei das Paar Laserstrahlen (31, 33) dann einer räumlichen Bahn (T) folgt, entlang derer die durch die multifunktionalen Vektorvorrichtungen (10) , welche an dieser räumlichen Bahn (T) entlang vorhanden sind, zu erzeugende und zu übertragende elektrische Energie benötigt wird.

8. Das Verfahren gemäß dem vorausgegangenen Anspruch, **dadurch gekennzeichnet, dass** es vor Betätigung der Laservorrichtung (32) den Schritt des Wartens auf das Trocknen der Isolierflüssigkeit (FI) umfasst, indem wahlweise entsprechende Trocknerelemente (36) für die Isolierflüssigkeit (FI) zugeschaltet werden, um eine Betriebsmasse (M) herzustellen, die im Wesentlichen aus der Baugruppe der Vektorvorrichtungen (10) besteht, welche im Betriebsvolumen (V) vorhanden sind, nachdem sie durch die Magnetfelderzeugerelemente (34), die jeweils in der Isolierflüssigkeit (FI) fusioniert und kompaktiert werden, gemäß spezifischer Geometrien entsprechend ausgerichtet worden sind.

9. Das Verfahren gemäß den vorausgegangenen Ansprüchen 3, 7 und 8, **dadurch gekennzeichnet, dass** es den Schritt der Betätigung der Laservorrichtung (32) umfasst, die die Vektorvorrichtungen (10) trifft, welche an einer erwünschten räumlichen Bahn (T) entlang vorhanden sind für die Übertragung elektrischer Signale mit einem Paar Laserstrahlen (31, 33) mit einer zweiten Ausgangsleistung, welche in der Lage ist, die jeweiligen Elemente von Typ NiTiNol (19) zu betätigen, die in den entsprechenden Vektorvorrichtungen (10) vorhanden sind.

10. Das Verfahren gemäß dem vorausgegangenen Anspruch, **dadurch gekennzeichnet, dass** es am Ende des vorausgegangenen Schritts jeweils den Schritt der Betätigung der genannten Laservorrichtung (32) umfasst, und zwar indem ein Laserstrahlenpaar (31, 33) mit der genannten zweiten Ausgangsleistung gemäß einer entsprechenden räumlichen Bahn (T) gesteuert wird, entlang derer die Übertragung elektrischer Signale durch zuvor zugeschaltete Vektorvorrichtungen (10) unterbrochen werden muss, und indem weitere Vektorvorrichtungen (10) gemäß einer räumlichen Bahn (T) zugeschaltet werden, entlang derer die genannte Übertragung, die jeweils dem vorausgegangenen Schritt entspricht, stattfinden muss, wobei dieser Schritt jedes Mal dann wiederholt wird, wenn die Voraussetzungen der Erzeugung und/oder Übertragung elektrischer Ströme und/oder Signale gemäß einer erwünschten und andersgearteten räumlichen Bahn (T) geändert werden müssen.

## Revendications

1. Dispositif vectoriel multifonctionnel adapté pour se déplacer et fonctionner à l'intérieur d'un fluide isolant ayant des propriétés de liaison, notamment une masse de suspension (FI), pour la génération et/ou la transmission d'énergie électrique et/ou de signaux électriques, **caractérisé en ce qu'**il comprend :
- un noyau central (12) constitué d'un matériau piézoélectrique ou piézo-thermique ou avec des propriétés triboélectriques, préparé de manière à générer des courants électriques pulsés une fois soumis à une contrainte physique adaptée à cet effet, et pourvu à ses deux extrémités d'une paire d'électrodes (13, 14) de polarité opposée ;
- des moyens de redressement de courant électrique (20), notamment préparés dans une disposition sensiblement en pont de Graetz (20*), associés à ladite paire d'électrodes (13, 14) du noyau central (12) de manière à définir, sur une paire de faces extérieures (15, 16), une paire de polarités (+, -) en sortie des mêmes moyens de redressement (20) et où ledit noyau central (12), lorsqu'il est soumis à une contrainte physique adaptée, à cet effet génère un courant électrique pulsé qui est rendu continu, en sortie sur ladite paire de polarités (+, -) des moyens de redressement (20) ;
- des moyens ferromagnétiques (17, 18) associés à chacune desdites faces extérieures (15, 16) adaptés dans leur ensemble à générer un champ magnétique spécifique, polarisé et dirigé ;
- des moyens de protection de type isolant (11) associés au noyau central (12) et auxdits moyens de redressement (20) pour recouvrir et isoler l'ensemble dudit noyau central (12) et des moyens de redressement (20).

2. Dispositif vectoriel multifonctionnel, selon la revendication précédente, **caractérisé en ce que** les moyens de redressement (20) comprennent :
- au-dessus de chacune desdites paires de faces extérieures (15, 16) et en contact électrique avec elles, une paire de moyens de diodes (22, 24) espacés l'un de l'autre, notamment avec interposition à une distance respective d'au moins une partie desdits moyens ferromagnétiques (17, 18) ;
- une paire de moyens conducteurs (25), reliant chacun l'un des moyens de diodes (22, 24) de la paire respective de moyens de diodes (24, 22) présents sur la face extérieure respective (15, 16) ;
- des moyens isolants (26) appliqués à une surface extérieure (23) d'une paire de moyens de diodes (22) positionnés chacun sur une face extérieure différente (15, 16) ; les moyens isolants (26) forment une surface régulière, en particulier sensiblement plate (28), avec des surfaces de contact respectives associées extérieurement à la paire restante de moyens de diodes (24) présents sur chaque face extérieure (15, 16).

3. Dispositif vectoriel multifonctionnel, selon l'une des revendications précédentes, **caractérisé en ce qu'**il comporte des moyens de type NiTiNol (19) associés de façon permanente et avec continuité électrique à chaque paire de faces extérieures (15, 16) du noyau central (12), notamment directement sur les mêmes faces extérieures (15, 16) avec interposition de moyens adhésifs électriquement conducteurs (9) et en dessous de moyens de diodes (22, 24), lesdits moyens de type NiTiNol (19) ayant pour fonction d'augmenter leur volume lorsqu'ils sont sollicités par une source de chaleur d'une puissance suffisante jusqu'à court-circuiter le dispositif vectoriel (10) (position ON, figures 7 à 9), plutôt que de revenir ensuite sensiblement à leur position initiale s'ils sont à nouveau sollicités par la même source de chaleur à la même puissance (position OFF, figures 7 à 9).

4. Dispositif vectoriel multifonctionnel selon les revendications 3 et 4, **caractérisé en ce que** lesdits moyens de type NiTiNol ont sensiblement la forme d'une plaque (19) et ont pour fonction d'augmenter leur volume transversal lorsqu'ils sont sollicités par une source de chaleur de puissance suffisante jusqu'à intercepter la paire de moyens conducteurs (25), court-circuitant ainsi le dispositif vectoriel (10), (position ON, figures 7 à 9) plutôt que de revenir ensuite sensiblement à leur position initiale s'ils sont sollicités par la même source de chaleur à la même puissance (position OFF, figures 7 à 9).

5. Système de génération et/ou de transmission d'énergie électrique et/ou de signaux électriques **caractérisé en ce qu'**il comprend :
- au moins un dispositif vectoriel multifonctionnel (10) selon l'une des revendications précédentes ;
- un dispositif laser (32) d'un type à double faisceau de sortie (31, 33) adapté pour fondre et/ou perforer lesdits moyens isolants (11) du dispositif vectoriel (10) et activer des moyens de type NiTiNol (19) éventuellement présents dans le même dispositif (10) lorsque ledit au moins un dispositif vectoriel (10) est présent à l'intérieur d'un fluide isolant, notamment d'une masse en suspension (FI) à l'intérieur d'un volume de travail (V) ;
- des moyens générateurs de champs magnétiques (34) d'un type adapté pour diriger les dispositifs vectoriels multifonctionnels (10) à l'intérieur du fluide isolant (FI) selon des parcours spatiaux (T) donnés et souhaités.

6. Système selon la revendication précédente, **caractérisé en ce que** la pluralité de dispositifs vectoriels (10), après avoir établi la configuration dans laquelle toujours la même polarité +, - en sortie du moyen de redressement (20) est fixée au-dessus et en dessous du noyau (12), comprend :
- environ 50 % des dispositifs vectoriels (10) ayant une première polarité ferromagnétique (N, S) présente au-dessus du noyau (12) et avec une valeur polarisée sensiblement prévalente par rapport à une seconde polarité (S, N) présente en dessous du même noyau ;
- la partie restante des dispositifs vectoriels (10) ayant la seconde polarité ferromagnétique (S, N) présente au-dessus du noyau (12) et la première polarité (N, S) présente en dessous du même noyau.

7. Procédé de génération et/ou de transmission d'énergie électrique et/ou de signaux électriques, **caractérisé en ce qu'**il comprend les étapes consistant à :
- définir un volume de travail (V) à l'intérieur duquel de l'énergie électrique et/ou des signaux électriques doivent être générés et/ou transmis ;
- remplir le volume de travail (V) avec un fluide isolant ayant des propriétés de liaison, en particulier une masse de suspension (FI) ;
- disperser au moins un dispositif vectoriel multifonctionnel (10) d'un type selon l'une des revendications précédentes 1 à 4 à l'intérieur du fluide isolant (FI), les dispositifs vectoriels multifonctionnels (10) étant constitués sensiblement de 50 % de dispositifs vectoriels (10) polarisés par lesdits moyens ferromagnétiques (17, 18) avec une polarité magnétique spécifique (N, S) présente à une polarité électrique (+, -) en sortie des moyens de redressement (20) et la partie restante polarisée avec l'autre polarité magnétique (S, N) présente à la même polarité électrique (+, -) des moyens de redressement (20) ;
- diriger lesdits dispositifs vectoriels (10) à l'intérieur du fluide isolant (FI) selon une disposition spatiale (T) prédéterminée à travers un champ magnétique généré par des moyens générateurs de champs magnétiques (34) d'un type selon l'une des revendications précédentes 5 et 6 ;
- actionner un dispositif laser (32) d'un type selon l'une des revendications précédentes 5 et 6 dirigeant une paire de faisceaux laser (31, 33) de manière à ce qu'ils affectent, à tout moment, un seul dispositif vectoriel multifonctionnel (10) à un premier niveau de puissance de sortie capable de faire fondre et/ou de perforer les moyens de protection de type isolant relatif (11), en l'activant électriquement, la paire de faisceaux laser (31, 33) suivant alors un parcours spatial (T) le long duquel l'énergie électrique à générer et à transmettre à travers les dispositifs vectoriels multifonctionnels (10) présents le long dudit parcours spatial (T) est requise.

8. Procédé selon la revendication précédente, **caractérisé en ce qu'**il comprend, avant de mettre en oeuvre le dispositif laser (32), l'étape consistant à attendre le séchage du fluide isolant (FI), en activant éventuellement des moyens de séchage (36) du fluide isolant (FI) de manière à former une masse de travail (M) sensiblement constituée par l'ensemble de dispositifs vectoriels (10) présents dans le volume de travail (V) après avoir été convenablement orientés selon des géométries spécifiques par les moyens générateurs de champs magnétiques (34), amalgamés et compactés à l'intérieur du fluide isolant (FI).

9. Procédé selon les revendications précédentes 3, 7 et 8, **caractérisé en ce qu'**il comprend l'étape consistant à mettre en oeuvre le dispositif laser (32) frappant les dispositifs vectoriels (10) présents le long d'un parcours spatial souhaité (T) pour la transmission de signaux électriques avec une paire de faisceaux laser (31 ,33) à une seconde puissance de sortie capable de mettre en oeuvre les moyens de type NiTiNol (19) présents dans les dispositifs vectoriels respectifs (10).

10. Procédé selon la revendication précédente, **caractérisé en ce qu'**il comprend, à la fin de l'étape précédente, l'étape consistant à mettre en oeuvre ledit dispositif laser (32) en dirigeant une paire de faisceaux laser (31 ,33) avec ladite seconde puissance de sortie selon un parcours spatial (T) le long duquel la transmission de signaux électriques à travers des dispositifs vectoriels (10) précédemment activés doit être interrompue, et en activant d'autres dispositifs vectoriels (10) selon un parcours spatial (T) le long duquel ladite transmission équivalente à l'étape précédente doit s'effectuer ; cette étape est répétée chaque fois que les conditions de génération et/ou de transmission de courants électriques et/ou de signaux électriques doivent être modifiées en fonction d'un parcours spatial (T) souhaité et différent.
